Europäisches Patentamt

European Patent Office

Office européen des brevets

(19)

(11) Publication number: **0 165 631**

**A1**

(12) # EUROPEAN PATENT APPLICATION

(21) Application number: **85200801.0**

(22) Date of filing: **17.05.85**

(51) Int. Cl.⁴: **B 23 K 1/16**

(30) Priority: **19.06.84 NL 8401950**
**13.02.85 NL 8500408**

(43) Date of publication of application:
**27.12.85 Bulletin 85/52**

(84) Designated Contracting States:
**BE CH DE FR GB LI NL**

(71) Applicant: **Thomassen & Drijver-Verblifa N.V.**
**Zutphenseweg 51**
**NL-7418 AJ Deventer(NL)**

(72) Inventor: **Glerum, Johannes Adriaan**
**Ceintuurbaan 34**
**NL-7415 AM Deventer(NL)**

(72) Inventor: **Klunder, Robert Christoffel**
**Jacob van Ruysdaelstraat 19**
**NL-7391 AW Twello(NL)**

(74) Representative: **Schumann, Bernard Herman**
**Johan et al,**
**OCTROOIBUREAU ARNOLD & SIEDSMA Sweelinckplein**
**1**
**NL-2517 GK The Hague(NL)**

(54) **Method of manufacturing a body having an opening tear, the body manufactured, and a metal plate out of which the body is to be manufactured.**

(57) The invention relates to a method of manufacturing a body in which of a folded metal plate having an opening tear terminating in a tongue, overlapping edges are welded together, characterized in that at the opening tear the welding intensity is decreased as such that either solely tin-melting occurs so that at the opening tear the edges are linked by melted tin, or welding is interrupted and thereafter a slot formed at the opening tear between the overlapping edges is covered using a sealing material.

Further the invention relates to a metal plate having an opening tear formed by two weakening scores extending traverse to its edges and terminating in a tongue, characterized in that at the opening tear one of the edges is provided with a covering- and/or oxide layer which has a relatively smaller electrical conductivity, to the body manufactured and to a container comprising same.

FIG.8

FIG. 14

EP 0 165 631 A1

0165631

METHOD OF MANUFACTURING A BODY HAVING AN OPENING TEAR, THE
BODY MANUFACTURED, AND A METAL PLATE OUT OF WHICH THE BODY
IS TO BE MANUFACTURED.

---

The present invention relates to a method of manufacturing a body in which of a folded metal plate having an opening tear terminating in a tongue, overlapping edges are welded together.

Such a body having an opening tear terminating in a tongue, can be used in making for instance tripartite preservation cans. The broadly used resistance welding process has on the one hand the disadvantage, that welding at the opening tear the overlapping edges such a strong link is formed, that it is difficult to open the can at the opening tear using any suitable gear. On the other hand often rather sharp structures are formed after removing the opening tear, because the weakening scores defining the opening tear have almost completely disappeared after welding.

A known method consists of applying additional welding material on the overlapping edges at the opening tear. Apart of the required additional installation for adding additional welding material, has this known method the disadvantage, that the quantity of welding material to be added is different from one body to the other.

The invention has for its object to improve the method mentioned, that at the crossing of the opening tear with the overlappig edges a hermetical sealing is formed, but the opening tear can easily be opened. According to the method of the invention at the opening tear the welding intensity is decreased as such that either solely tin-melting occurs so that at the opening tear the edges are linked by melted tin, or welding is interrupted and thereafter a slot formed at the opening tear between the overlapping edges is covered using a sealing material.

In various ways the welding intensity can be reduced at the opening tear: firstly at the opening tear the welding intensity is decreased by reducing at the opening tear the current intensity of the current passing through the overlapping edges, and secondly the welding intensity is decreased by increasing at the opening tear the electrical resistance.

Increasing the electrical resistance at the opening tear can be effected either by providing at the opening tear at least one of the overlapping edges of the folded metal plate with a covering layer and/or oxide layer which has a relatively small electrical conductivity, or by increasing at the opening tear the thickness of the material, which preferably is realized by folding the tongue protruding the plate edge backwardly prior to welding. An attendent advantage of folding backwardly the tongue is, that both overlapping edges are generally straight, so that such a metal plate can be welded using an automatically working welding apparatus provided with a "z"-like leading element (a so called Z-bar).

Another aspect of this embodiment of the invention relates to a metal plate having an opening tear formed by two weakening scores extending traverse to its edges and terminating in a tongue, which plate is characterized either in that at the opening tear one of the edges is provided with a covering- and/or oxide layer which has a relatively smaller electrical conductivity, or by a backwardly folded tongue.

A last aspect of this embodiment of the invention relates to a body manufactured according to the method of the invention, which body is characterized by a link formed by melted tin and extending at the opening tear between the overlapping edges, tin originates from the tin coating of the metal plate.

With respect to the second embodiment of the invention it appears surprisingly, that if over a small part of the height of the body the overlappig edges are not welded together, this does not lead to a mutual budging, and that it is sufficient for obtaining a hermetic sealing, that the slot formed by interrupting the welding operation is sealed.

Although any suitable sealing material can be used, it is advantageous to use as sealing material a lacquer with which a weldseam of known bodies, formed by welding is lacquered or covered. Thereto it is advantageous, that the sealing material is applied along the weldseam.

If preferably the sealing material is applied on the interial surface of the body, then the contents to be contained in the body cannot come into contact with the metal, as to prevent any undesired effects.

The slot can be sealed in a simple way, if preferably the sealing material is a thermoplastic material, in which preferably a powderous material is applied, which subsequently is melted using heat. If prior to welding the tongue protruding the plate edge is folded backwardly, the advantage is obtained, that both overlapping edges are generally straight, so that such a metal plate can be welded using an automatic welding apparatus, having a leading element in a "z"-form (a so called Z-bar). In order to obtain a welding operation which is as even as possible, it is preferred, that both the tongue and the adjecent edge are bended backwardly.

Another aspect of the second embodiment according to the invention relates to a body formed out of a folded metal plate having an opening tear terminating in a tongue and of which overlapping edges are welded together, characterized by a slot extending at the opening traverse between the overlappig edges.

With respect to this second embodiment the invention further relates to a metal plate out of which the body is formed, and to a container provided with such a body.

Cited and other characteristics will be illustrated in a number of not limiting examples of both embodiments referring to the annexed drawing.

In the drawing is:

Fig. 1 a perspective, schematic view of a process according to the invention for the manufaturing of a body;

Fig. 2 is schematic a section along the line II-II of fig. 1;

Fig. 3 is on a larger scale detail III of fig. 2;

Fig. 4 and 5 both a metal plate appropriate for forming a body, the plate according to fig. 4 is provided with a layer conducting electrical current relatively bad, and the plate according to fig. 5 is provided with a tongue bended backwardly;

Fig. 6 is a view comparable to that of fig. 1 of a second embodiment of the method for manufacturing a body, in which use is made of Z-bar;

Fig. 7 is a section along the line VII-VII of fig. 6;

Fig. 8 is a perspective view partly broken away of a welded body manufactured from a metal plate shown in fig. 5;

Fig. 9 is a variant of detail IX of fig. 5;

Fig. 10 and 11 are both schematic a section along the line II-II of fig. 1 before respectively after the interruption of the welding operation at the opening tear;

Fig. 12 and 13 show schematical views of applying and forming the sealing material after welding according to the invention; and

Fig. 14 is a section along the bended line XIV-XIV of fig. 13.

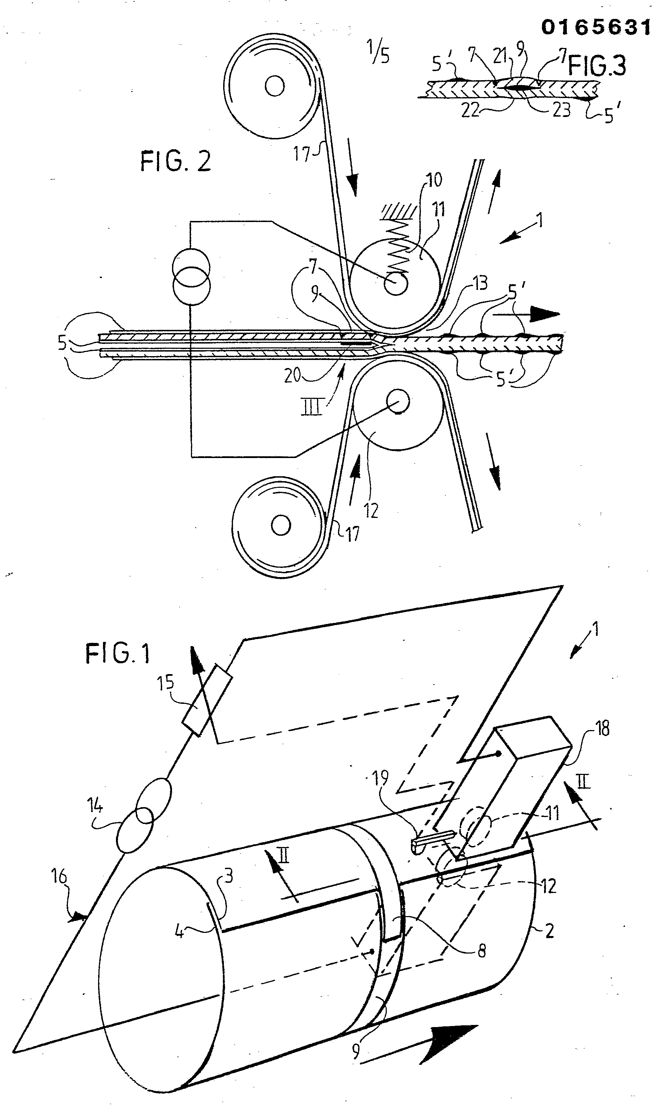

Fig. 1 shows an apparatus 1 for manufacturing a body 2 by thermal welding of overlapping edges 3 and 4 of a bended metal plate 6, provided with an opening tear 9 defined by weakening scores 7 formed traverse of the edges 3, 4 in the metal plate and terminating in a tongue 8.

The apparatus 1 comprises two cooperative rolls 11, 12 which are forced towards one another under the action of spring means 10, the rolls define a notch 13 through which the body with the overlapping edges 3, 4 are passed. Moving the body 2 between the rolls 11 and 12 an electric current is passed through the roll 11, the overlapping edges 3 and 4 and through the roll 12, thereto the rolls 11 and 12 are incorporated in a current circuit further comprising a transformer 14 and an adjustable resistor 15. Under the influence of heat generated in the part of the metal passed between the rolls 11 and 12, the metal melts and the edges 3 and 4 are-fused, and tin originating from the coating 5 is taken up by copper threads 17 and disposed, whereas only thin residues 5' remain on the metal.

A unit 18 carrying the roll 11 comprises a plunger 19 used to determine the position of the opening tear 9 with respect to the notch 13. A signal delivered by the plunger 19 can be used to control the adjustable resistor 15 as such, that when the opening tear 9 passes through the notch 13 the current intensity in the current circuit 16 is decreased. This means, that the heat generated in the overlapping edges 3 and 4 is strongly decreased, so that at the opening tear 9 the metal of the overlapping edges 3 and 4 does not fuse, and solely a melting of the tin present occurs. This results in a weakened but hermetically closed link between the overlapping edges 3 and 4 at the opening tear 9, and this link can easily be broken if with a gear not shown on the tongue a force is exerted in a direction away from the body 2.

If, as shown in fig. 2 at the opening tear 9 the overlapping edges are provided with a coating 20 conducting an electric current relatively bad, a plunger 19 and an adjustable resistor 15 can be omitted, because at a constant current difference between the rolls 11 and 12 the current passing through the body 2 at the opening tear 9 will decrease as a result of the increased resistance obtained with the coating 20.

Fig. 3 shows more in detail a weld obtained at the opening tear 8. It is noted, that on both sides of the tongue 8 both edges 3 and 4 are fused and the tin coating originally present there and between is forced away. At the opening tear 8 occured solely a tin fusion, so that the original part 21 of the overlapping edge 3 and the part 22 of the edge 4 remain present and are separated by a quantity 23 of fused tin. Clearly is shown, that although the body is passed through the notch 13 the weakening scores originally present retain generally their original form. The numeral 5' indicates the residual parts of the tin coating.

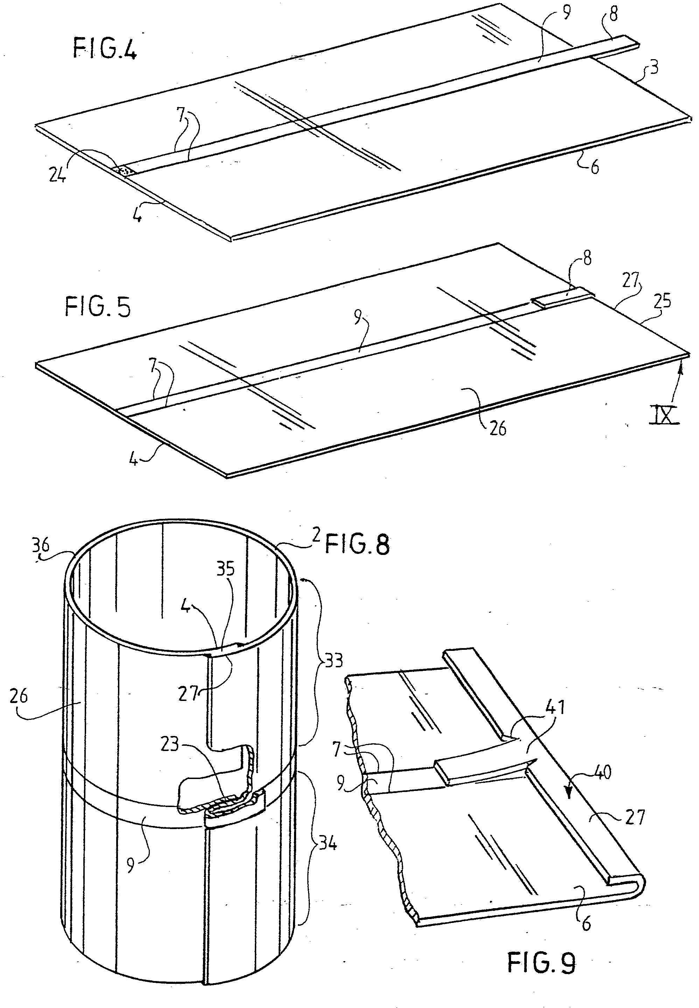

Fig. 4 shows the metal plate 6 on which at the opening tear 9 on the edge 4 a layer 24 conducting an electric current relatively bad, is applied. This layer 24 could comprise a covering layer and/or an oxide layer obtained by a chemical treatment of this surface, for instance a treatment using fosfate or chromate.

Fig. 5 shows a similar metal plate 25, in which, however, the tongue 8 is bended backwardly and lies along the surface 26, eventually forming the exterior surface of the welded body. Bending the tongue 8 backwardly creates on the one hand along the edge 27 at the tearing opening 9 a larger material thickness, which there leads to a higher electric resistance, and on the other hand to an even undisturbed edge 27. Accordingly the mutual overlapping edges 27 and 4 are straight and uninterrupted and can be used for the adjustment of the overlapping width.

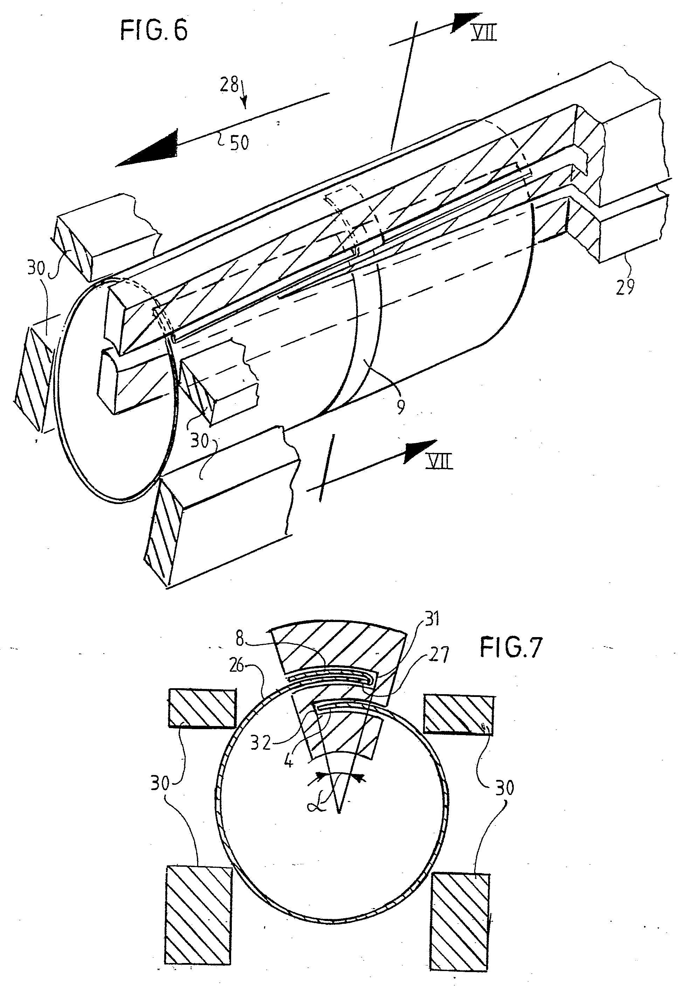

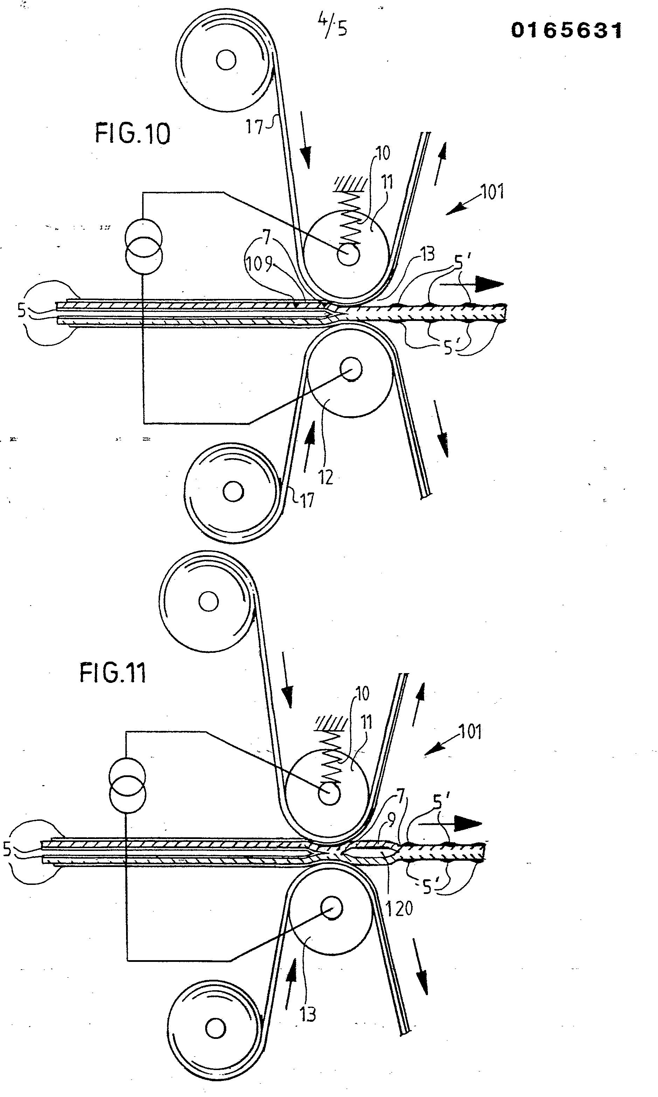

Fig. 6 shows schematically an automatic welding apparatus 28 comprising a leading element 29 having generally the form of a letter "Z". As shown more in detail in fig. 7 the external leading means 30 push the edge 27 against the leading wall 31 and the edge 4 against the leading wall 32 whereas the angle $\alpha$ in the direction of the arrow 50 decreases. Between the leading walls 31 and 32 the overlapping width between the edge 27 and the edge 4 can be adjusted accurately. This width is in the range of about 0.1-4mm.

Since the tonge 8 is bended backwardly and lies on the surface 26 this results in a larger material thickness at the opening tear 9, resulting at a constant current difference to a smaller current transmission through the material at the rolls 11 and 12 not shown, so that as a result of the lower temperature solely a tin melting occurs, and this melted tin forms a hermetic link between the edge 27 and the edge 4 at the opening tear. Since the tongue 8 bended backwardly, automatically results in a local current reduction, also in this case means locating the tongue 8 relative to he rolls 11 and 12 can be omitted.

Fig. 8 shows a body manufactured of a plate 25. It is noted that the parts 33 and 34 of the weldseam 35 consist of fused edges 4 and 27 which generally did not encircle tin. At the opening tear 8 the overlapping edges 27 and 4 are separated by a quantity 23 of melted tin which hermetically seals a space between the overlapping edge 27 and the overlapping edge 4 at the opening tear 9. There is substantially no fusion of metal 36 which generally forms the plate 25. This metal is for instance steel. This steel can be tin coated on both sides.

Depending on the quantity and quality of the tin link 5, it could be necessary to apply an additional small amount of solder material at the opening tear between the overlapping edges 3 or 27, and 4. This solder material has in principal the function of a hermetic seal formed between the overlapping edges at the opening tear 9, without forming a rather strong link between these overlapping edges. Next to tin silver, lead and/or alloys thereof can be used.

Fig. 9 shows, that the edge 27 is bended backwardly, so that the rolls 11 and 12 move over a continuous plane and in comparison with fig. 7 does not "jump" at the stepwise change between the plate 25 and the tongue 8. The fold 40 (width about several mm) is provided with indentions 41 starting the scoring of the opening tear or score tap 9.

In combination with fig. 1 the fig. 10 and 11 show an apparatus 101 in which at the opening tear 109 the welding is interrupted.

Using a signal derived from the plunger 19 a controlling unit 15 incorporated in the current circuit 16 is controlled as such that when the opening tear 9 passes through the notch 13, the current transmission through the rolls 11 and 12 is blocked. This means that at the crossing of the opening tear 109 and the overlapping edges 3 and 4 no welding operation is performed, and as fig. 11 shows, after passing through the notch 13 a slot 120 remains between both edges at the opening tear 109.

If so called spot-welding is used, in which on discrete intermittent electric currents are generated in the current circuit 16, the control unit has for its function to interrupt during a period of time the intermittent current pulses, so that at the crossing of the opening tear with the overlapping edges no welding operation occurs.

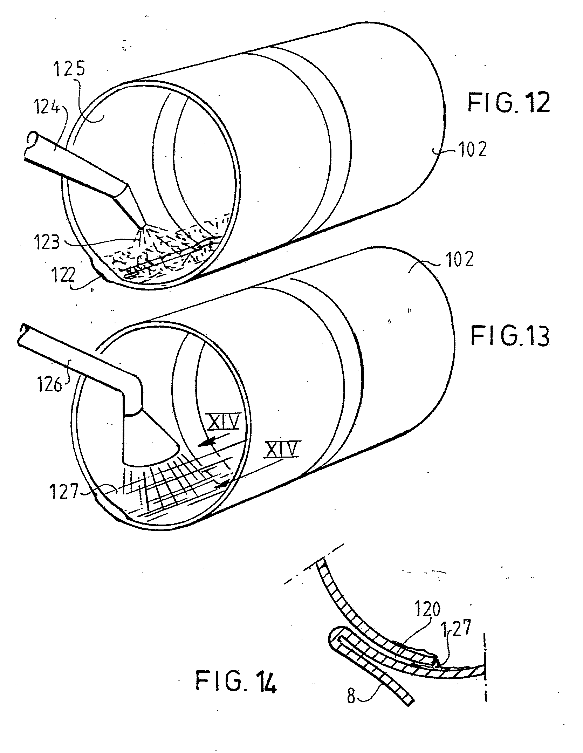

After performing the welding operation, in which at the opening tear the welding is interrupted, as shown in fig. 12-14 sealing material 123 is applied over the weldseam 122 along the whole heigth of the body 102. Via a nozzle 124 powderous material 123 is applied at the internal side 125 over the whole weldseam 122. Using a heat generator 126 the powderous materail applied is subsequently melted, so that it fuses forming a coating 127 covering the weldseam 122, the slot 120 and the adjecent zone. Accordingly an open passage through the body 102 is prevented. On the other hand is prevented, that material present at the weldseam and/or at the overlapping edges, of which the body 102 is formed, will come into contact with the contents to be contained in the body 102, so that inherent, undesired phenomena (meat discoloration) are avoided.

As sealing material any in the art available material

0165631

for covering a weldseam, can be used, for instance a plastic based on epoxy or polyesters.

Although in the drawings a folded body is shown with a circle round cross section, it will be understood, that the present invention is also applicable to other types of bodies, with an unround, angular, square, rectangular, cross section, and the like.

## Claims

1. Method of manufacturing a body in which of a folded metal plate having an opening tear terminating in a tongue, overlapping edges are welded together, characterized in that at the opening tear the welding intensity is decreased as such that either solely tin-melting occurs so that at the opening tear the edges are linked by melted tin, or welding is interrupted and thereafter a slot formed at the opening tear between the overlapping edges is covered using a sealing material.

2. Method as claimed in claim 1, characterized in that at the opening tear the welding intensity is decreased by reducing at the opening tear the current intensity of the current passing through the overlapping edges.

3. Method as claimed in claim 1, characterized in that the welding intensity is decreased by increasing at the opening tear the electrical resistance.

4. Method as claimed in claim 3, characterized in that at the opening tear at least one of the overlapping edges of the folded metal plate is provided with a covering layer and/or oxide layer which has a relatively small electrical conductivity.

5. Method as claimed in claim 3, <u>characterized in that</u> at the opening tear the thickness of the material is increased.

6. Method as claimed in claim 5, <u>characterized in that</u> prior to welding the tongue protruding the plate edge is folded backwardly.

7. Method as claimed in claim 1, <u>characterized in that</u> the sealing material is applied along the weldseam.

8. Method as claimed in claim 1 or 7, <u>characterized in that</u> the sealing material is applied at the internal surface of the body.

9. Method as claimed in claim 1, 7, 8, <u>characterized in that</u> the sealing material is a thermoplastic material.

10. Method as claimed in claim 9, <u>characterized in that</u> a powderous material is applied which is melted together using heat.

11. Method as claimed in any of the preceding claims, <u>characterized in that</u> prior to welding the tongue protruding the plate edge is folded backwardly.

12. Method as claimed in claim 11, <u>characterized in that</u> the tongue together with the adjacent edge are bended backwardly.

13. Metal plate having an opening tear formed by two weakening scores extending traverse to its edges and terminating in a tongue, <u>characterized in that</u> at the opening tear one of the edges is provided with a covering- and/or oxide layer which has a relatively smaller electrical conductivity.

14. Metal plate having an opening tear formed by two weakening scores extending traverse to its edges and terminating in a tongue, <u>characterized in that</u> the tongue is bended backwardly.

15. Body manufactured according to any of the claims 1-7, <u>characterized by</u> a link formed by melted tin and extending at the opening tear between the overlapping edges.

16. Body formed out of a folded metal plate having an opening tear terminating in a tongue and of which overlapping edges are welded together, characterized by a slot extending at the opening traverse between the overlapping edges.

17. Body as claimed in claim 16, characterized by a coating covering the slot.

18. Container having a body as claimed in claim 15, 16 or 17, and at least one end part linked to the body.

0165631

1/5

FIG.3

FIG. 2

FIG.1

0165631

FIG.4

FIG.5

FIG.8

FIG.9

IX

12-65+72.

FIG.6

VII

28

50

30

29

9

30

VII

31

8

27

FIG.7

26

32

4

30

$\alpha$

30

0165631

FIG.10

FIG.11

FIG. 12

FIG. 13

FIG. 14

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 038 646 (TOYO SEIKAN KAISHA) | | B 23 K 1/16 |
| A | US-A-3 077 171 (AMERICAN CAN) | | |

TECHNICAL FIELDS SEARCHED (Int. Cl.4)

B 23 K

The present search report has been drawn up for all claims

| Place of search | Date of completion of the search | Examiner |
|---|---|---|
| THE HAGUE | 19-06-1985 | HOORNAERT W. |